# EUROPÄISCHE PATENTSCHRIFT

(11) **EP 1 837 212 B1**
(45) Veröffentlichungstag und Bekanntmachung des Hinweises auf die Patenterteilung: **17.09.2008**
(21) Anmeldenummer: 07002792.5
(22) Anmeldetag: 09.02.2007
(51) Int. Cl.: B60G 11/48, B60G 17/027, B60G 21/055

(54) **Federungssystem für eine Fahrzeug-Radaufhängung**
Suspension system for vehicle wheel suspension
Système de ressort pour une suspension de roue de véhicule

(30) Priorität: 15.03.2006 DE 102006011856; 10.01.2007 DE 102007001544
(43) Veröffentlichungstag der Anmeldung: 26.09.2007
(73) Patentinhaber: Bayerische Motoren Werke Aktiengesellschaft, 80809 München (DE)
(72) Erfinder: Pruckner, Alfred, Dr., 81545 München (DE); Schlichte, Dirk, 80469 München (DE)

(56) Entgegenhaltungen:
- EP-A- 0 407 075
- DE-A1- 3 323 026

## Beschreibung

Die Erfindung betrifft ein Federungssystem für eine Radaufhängung eines zweispurigen Fahrzeugs mit einem letztlich zwischen dem Fahrzeug-Aufbau und einem Fahrzeug-Rad eingespannten ersten Federelement und einem zweiten oder weiteren mittels eines am Fahrzeug-Aufbau abgestützten mechanischen Spannelements letztlich zwischen dem Fahrzeug-Aufbau und dem Fahrzeug-Rad einspannbaren Federelement, das somit dem ersten Federelement parallel geschaltet werden oder nicht aktiv geschaltet werden kann, wobei das zweite oder weitere Federelement als Verdreh-Federelement ausgebildet ist. Zum technischen Umfeld wird neben der DE 10 2004 013 559 A1 insbesondere auf die gattungsbildende DE 33 23 026 A1 verwiesen.

Fahrwerke von Kraftfahrzeugen können nach unterschiedlichen Philosophien ausgelegt werden. Komfortabel ausgelegte Fahrwerke von Personenkraftwagen sind relativ weich, sportlicher ausgelegte Fahrwerke relativ hart. Neben der unterschiedlichen Philosophie der einzelnen Hersteller von Automobilen bzw. Personenkraftwagen kann bei einigen Fahrzeugen als Sonderausstattung ein "sportliches Fahrwerk" gewählt werden. Um diese Wahl im jeweiligen Fahrzeug variabel zu gestalten, bieten einige Hersteller sog. Verstelldämpfer an, mit welchen der Fahrer zwischen einer komfortablen und einer sportlichen Dämpferabstimmung wählen kann. Dabei nimmt diese unterschiedliche Dämpfereinstellung zwar subjektiv Einfluss auf das Empfinden des Fahrers, objektiv ist jedoch keine Verbesserung bezüglich eines sportlicheren Fahrverhaltens bei harter Dämpfung zu erreichen. Eine Verstellmöglichkeit der Federrate(n) wäre für diese Anwendung zweckmäßiger.

Letzteres ist für Fahrzeuge grundsätzlich bekannt, vgl. bspw. die beiden eingangs genannten Schriften. Dennoch besteht - auch wegen fehlender Umsetzung in der Großserie - Bedarf an Alternativen zu diesem bekannten Stand der Technik, von denen hiermit eine vorteilhafte Ausführungsform aufgezeigt werden soll (= Aufgabe der vorliegenden Erfindung).

Die Lösung dieser Aufgabe ist für ein Federungssystem einer Fahrzeug-Radaufhängung nach dem Oberbegriff des Anspruchs 1 dadurch gekennzeichnet, dass das zweite oder weitere Federelement einen ebenfalls als Drehstabfeder ausgebildeten Querstabilisator abschnittsweise umhüllt und derart mit diesem verbunden ist, dass die Federkraft im aktivierten Zustand über den Querstabilisator an die Fahrzeug-Räder übertragen wird. Vorteilhafte Aus- und Weiterbildungen sind Inhalt der Unteransprüche.

Zunächst sei erwähnt, dass es nun möglich ist, definiert einen (Betriebs)-Zustand einstellen zu können, in dem nur das erste, als Tragfeder fungierende Federelement und nicht das zweite oder weitere, diesem parallel schaltbare Federelement wirksam wird. Hiermit wird dann eine Aktivierung des zuschaltbaren Federelements in seiner Auswirkung besonders deutlich spürbar. Ferner ist für die Zuschaltung des zweiten oder weiteren Federelements die Verwendung eines mechanischen Spannelementes vorgeschlagen, da ein solches einfach und dabei zuverlässig arbeitend gestaltet werden kann. Besonders vorteilhaft wird ein solches mechanisches Spannelement durch die Möglichkeit, den Fahrzeug-Aufbau durch dieses Spannelement abzusenken oder anzuheben, wenn zweite oder weitere Federelemente vorgesehen sind, die zwischen dem Fahrzeug-Aufbau und den Rädern des Fahrzeugs als Zugfederelemente einspannbar sind. Vorzugsweise kann zusammen mit einem Zuschalten des zweiten oder weiteren Federelements und somit einem härteren Einstellen des Fahrwerks ein Tieferlegen des Fahrzeug-Aufbaus erfolgen, was für einen sportlichen Fahrbetrieb erwünscht ist. Ein Absenken des Fahrzeug-Aufbaus kann aber auch zur Vereinfachung des Beladens oder Einstiegs durchgeführt werden. Alternativ ist aber auch ein Anheben des Fzg.-Aufbaus durch Zuschalten eines weiteren Druck-Federelements neben dem ersten Federelement (= Tragfeder) möglich.

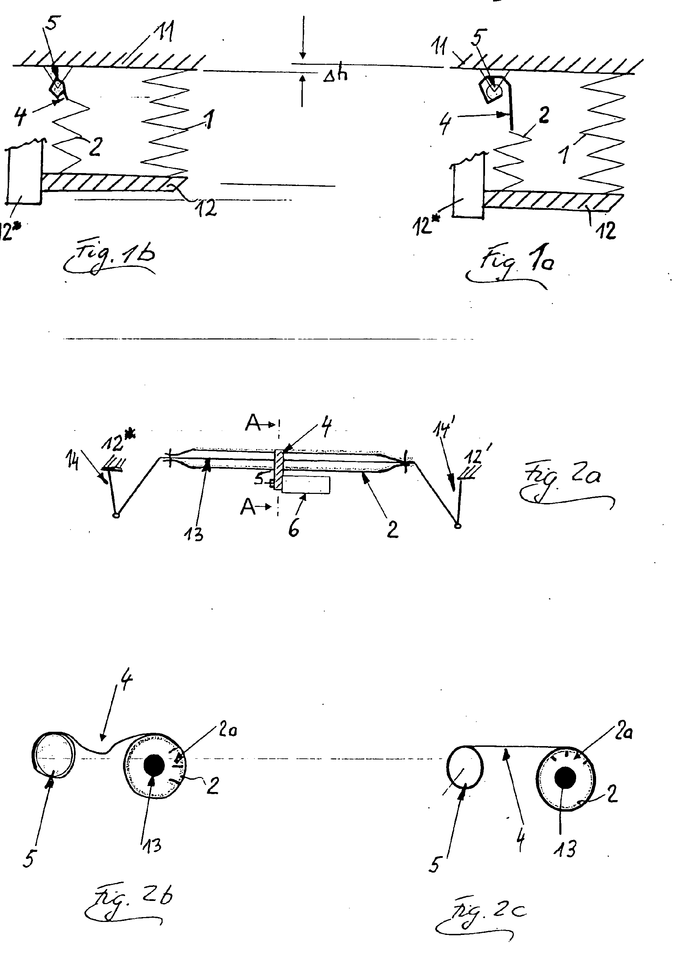

Wirken zwei oder mehrere Federelemente parallel zwischen zwei Bauteilen, so ist die wirksame Gesamt-Federrate durch der Summe der einzelnen Federraten der einzelnen Federelemente gebildet. Durch Zuschalten oder Abschalten eines zweiten oder mehrerer weiterer Federelemente in einem Kraftfahrzeugfahrwerk kann somit die Federrate bzw. die Härte des Fahrwerks variiert werden. Wird neben einem ersten, zwischen zwei Bauteilen eingespannten Federelement, welches im Falle eines Fahrzeug-Fahrwerks die übliche Tragfeder ist, ein zweites oder weiteres Federelement mit seinem ersten Ende am ersten Bauteil (bspw. am Fzg.-Rad bzw. Radträger oder an einem radführenden Lenker) fest montiert und wird an dessen anderem Ende als genanntes mechanisches Spannelement bspw. ein Zugmittel oder Zugelement, bei dem es sich um ein Band oder einen Riemen oder eine Kette oder dgl. handeln kann, befestigt, dessen zweites, dem zweiten Federelement abgewandtes Ende an einem zweiten Bauteil (bspw. am Fahrzeug-Aufbau) befestigt ist, so kann die Wirkung des zweiten oder weiteren Federelements zwischen den beiden genannten Bauteilen durch die Spannung des Zugmittels/Zugelementes zugeschaltet bzw. abgeschaltet werden, wie sich auch aus der folgenden Erläuterung anhand der Prinzipdarstellung in den beigefügten **Figuren 1a, 1b** ergibt. In diesen Figuren ist mit der Bezugsziffer 11 ein erstes Bauteil, hier konkret der Fahrzeug-Aufbau 11, und mit der Bezugsziffer 12 ein zweites Bauteil, konkret ein unterer radführender Querlenker 12 in der Radaufhängung eines zweispurigen Fahrzeugs gekennzeichnet. Dieser bzw. ein solcher (dem Fachmann bekannter) Querlenker 12 kann im Hinblick auf seine Funktion für die vorliegende Erläuterung einem Rad 12* des Fahrzeugs gleichgesetzt werden, da es bei dieser ersten Ausführungsform um letztlich zwischen dem Fzg.-Aufbau 11 und einem Fzg.-Rad 12* eingespannte Federelemente geht, die im weiteren mit den Bezugsziffern 1, 2 gekennzeichnet sind. Vorliegend sind diese Federelemente 1, 2, zwischen dem Fahrzeug-Aufbau 11 (= erstes Bauteil) und dem Querlenker 12 (= zweites Bauteil) eingespannt bzw. einspannbar.

Das erste Federelement 1 in Form einer Schrauben-Druckfeder ist zwischen dem Fzg.-Aufbau 11 und letztlich einem Fzg.-Rad 12 eingespannt und wirkt als übliche Tragfeder. Parallel hierzu ist ein zweites Federelement 2 vorgesehen, welches mit einem Ende am Querelenker 12 befestigt ist (und somit indirekt bzw. letztlich auch am Fzg.-Rad 12*), während am anderen Ende des Federelements 2 ein flexibles Zugmittel 4 oder Zugelement 4 angreift, das auf einer am ersten Bauteil bzw. am Fzg.-Aufbau 11 angeordneten und somit dort abgestützten Rolle 5 oder dgl. aufwickelbar oder von dieser abwickelbar ist. Diese Rolle 5 kann mittels eines hier nicht dargestellten Stellmotors in der einen oder in der anderen Drehrichtung in Rotation versetzt werden, um das freie Trum des Zugmittels 4 (hierbei handelt es sich um den zwischen dem Federelement 2 und der Rolle 5 befindlichen Abschnitt) schlaff oder schlapp zu halten, so wie dies in Fig.1a dargestellt ist, oder gespannt oder stramm zu halten, so wie dies in Fig.1b dargestellt ist.

Beim Zustand nach Fig.1a ist und bleibt jedenfalls dann, wenn das erste Federelement 1 weiter komprimiert und somit der Fzg.-Aufbau 11 zum Rad 12* bzw. Querlenker 12 hin bewegt wird, das zweite Federelement 2 unwirksam, d.h. ohne jeden Einfluss. Die wirksame Federrate ist hier diejenige des ersten Federelements 1.

Beim Zustand nach Fig.1b hingegen sei das zweite Federelement 2 durch das gespannte Zugmittel 4 vorzugsweise so weit gespannt, dass selbst bei einer weiteren Bewegung des Fzg.-Aufbaus 11 zum Rad 12* hin und somit bei einer weiteren Komprimierung des ersten Federelements 1 nicht nur das Zugmittel 4, sondern auch das zweite Federelement 2 stets gespannt bleibt und somit zusätzlich zum ersten Federelement 1 voll wirksam ist und bleibt. Die wirksame Federrate wird dann durch die Summe der beiden Federraten des ersten Federelements 1 und des zweiten Federelements 2 gebildet.

In diesem Zustand nach Fig.1b ist im übrigen, wie durch den Höhenvergleich (Δh) hervorgeht, der Fzg.-Aufbau 11 zum Rad 12* (bzw. folglich auch zur Fahrbahn hin) abgesenkt, und zwar durch entsprechendes Verkürzen des freien Trums des Zugmittels 4. Durch die Spannung des Zugelementes/Zugmittels 4 ist somit zusätzlich die Distanz zwischen den zu federnden Bauteilen 11, 12 veränderbar.

Nach diesen grundlegenden Erläuterungen sein nun auf die konkrete Ausgestaltung der vorliegenden Erfindung eingegangen. Demnach ist vorgeschlagen, das zweite oder weitere Federelement, das als Verdreh-Federelement ausgebildet ist, d.h. durch Tordieren dieses Federelements um eine Drehachse gespannt bzw. entspannt werden kann, als sozusagen rohrförmiges Verdreh-Federelement auf dem ansonsten üblichen und dem Fachmann bekannten Querstabilisator des zweispurigen Fahrzeugs anzuordnen. Damit fällt die Drehachse des Verdreh-Federelements vorzugsweise mit dem geradlinig und üblicherweise in FahrzeugQuerrichtung verlaufenden Abschnitt des Querstabilisators zusammen und es ergibt sich eine äußerst kompakte und bauraumoptimierte Anordnung. Die Übertragung der Federkraft des gespannten zweiten oder weiteren Federelements auf die Fahrzeug-Räder erfolgt dabei über den Querstabilisator, so dass der weitere Vorteil besteht, dass keine eigenständigen "Übertragungselemente" für das zweite oder weitere Verdreh-Federelement erforderlich sind, wobei vorteilhafterweise ein einziges mit seiner RohrInnenwand am Querstabilisator befestigtes Verdrehfederelement ausreichend ist, um dieses sowohl der Tragfeder des linken Fahrzeugsrades als auch gleichzeitig derjenigen des rechten Fzg.-Rades, zwischen denen der besagte Querstabilisator wirkend vorgesehen ist, parallel zuzuschalten.

Dabei kann das als zweites oder weiteres Federelement fungierende Verdreh-Federelement als einfaches rohrförmiges Gummifederelement ausgebildet sein, an dessen Rohr-Aussenwand ein mechanisches Spannelement geeignet angreift bzw. angreifen kann, derart, dass dieses Verdreh-Federelement eine entsprechende Federkraft an den Querstabilisator anliegt, über den diese dann letztlich an die Fahrzeug-Räder bzw. deren Radträger übertragen wird. Um dabei die gewünschte Abstützung gegenüber dem Fahrzeug-Aufbau zu erreichen, muss das mechanische Spannelement am Fahrzeug-Aufbau abgestützt sein.

Alternativ können aber auch zumindest zwei Verdreh-Federelemente vorgesehen sein. Beispielsweise, kann ein erstes dieser Verdreh-Federelemente dem linken Fzg.-Rad und ein zweites dieser Verdreh-Federelemente dem rechten Fzg.-Rad zugeordnet sein. Da üblicherweise den Tragfedern der beiden Fahrzeug-Räder einer Achse die gleiche weitere Federkraft parallel geschaltet werden wird, kann dies vorteilhafterweise mittels eines einzigen mechanischen Spannelements erfolgen, wenn die beiden (oder mehreren) Verdreh-Federelemente, die mit ihrer RohrInnenwand auf dem Querstabilisator befestigt - im Falle von Gummifederelementen bspw. aufvulkanisiert - sind, außenseitig über ein im wesentlichen torsionssteifes Rohr miteinander verbunden sind, d.h. die Rohr-Aussenwände der mehreren Verdreh-Federelemente sind über das besagte Rohr praktisch drehfest miteinander verbunden. Auch diese Verbindung zwischen den rohrförmigen Gummifederelementen und dem verbindenden Rohr kann durch Vulkanisieren hergestellt sein. Das genannte mechanische Spannelement kann dann vorzugsweise an der Außenwand dieses Rohres geeignet angreifen, um die mehreren Verdreh-Federelemente gemeinsam zu aktivieren und den Tragfedern der betroffenen Fzg.-Räder parallel zu schalten.

Alternativ kann das die mehreren Verdreh-Federelemente außenseitig verbindende Rohr als rohrförmige Drehstabfeder ausgebildet sein und somit seinerseits selbst als weiteres Federelement wirken. Alternativ ist es auch möglich, dass das zweite oder weitere Federelement selbst als rohrförmige Drehstabfeder ausgebildet ist, die konzentrisch zum Querstabilistor bzw. vorzugsweise zum mittigen, sich geradlinig erstreckenden Abschnitt des Querstabilisators und diesen umhüllend angeordnet ist und mit ihren Enden auf geeignete Weise zumindest drehfest mit dem Querstabilisator verbunden ist. Dabei kann die Rohrwand dieser rohrförmigen Drehstabfeder geschlitzt, vorzugsweise schräg geschlitzt, ausgeführt sein, einerseits um eine gewünschte Federrate darzustellen, und andererseits, um dieses rohrförmige Drehfederelement auf dem Querstabilisator montieren zu können.

In Verbindung mit der prinzipiellen Erläuterung zu den Figuren 1a, 1b wurde bereits erwähnt, dass das mechanische Spannelement durch ein am zweiten oder weiteren Federelement angreifendes flexibles Zugmittel gebildet sein kann, das auf einer Rolle oder dgl. aufwickelbar oder von dieser abwickelbar ist, wobei weiterhin ein diese Rolle geeignet antreibenden Stellmotor vorzugsweise Elektromotor, vorgesehen sein kann. Dabei können, wenn zwei rohrförmiges Federelemente nebeneinander auf dem Querstabilisator angeordnet sind, diese im Bereich ihren einander zugewandten Stirnseiten über das vorzugsweise bandförmige Zugmittel miteinander praktisch verbunden sein.

Im Sinne einer vorteilhaften Weiterbildung eines als Zugelement ausgebildeten mechanischen Spannelements können, da ein einzelnes tangential an der Rohr-Außenwand des Verdreh-Federelements oder eines mehrere nebeneinander angeordnete Verdreh-Federelemente verbindenden Rohres angreifendes flexibles Zugmittel ein Biegemoment in das Rohr bzw. in die Verdreh-Federelemente einleitet, am rohrförmigen zweiten oder weiteren Federelement) einander zumindest im wesentlichen entgegengerichtet zwei Zugmittel angreifen, die die Rohr-Außenwand beim Aktivieren gleichsinnig tordieren. Aufgrund der entgegen gerichteten Angriffsrichtung heben sich die individuell von jedem Zugmittel eingeleiteten Biegemomente auf.

Möglicherweise steht für eine bislang beschriebene mechanische Spannvorrichtung kein ausreichender Bauraum zur Verfügung, insbesondere wenn eine Wickel-Rolle für das genannte flexible Zugmittel samt entsprechender Wellenlagerung benötigt wird. Alternativ zu dieser Ausführungsform wird daher weitergehend vorgeschlagen, das mechanische Spannelement durch einen mit dem Verdreh-Federelement, d.h. mit dem zweiten oder weiteren Federelement direkt oder indirekt zumindest drehfest verbundenen Mitnehmer auszubilden und ein mit diesem Mitnehmer bspw. über einen Vorsprung oder dgl. zusammenwirkendes, gegenüber der Drehachse des Verdreh-Federelements verdrehbares Getriebeelement vorzusehen, welche dann in ihrer Gesamtheit die mechanische Spannvorrichtung bilden.

Während ein zuvor erläutertes als mechanisches Spannelement vorgesehenes flexibles Zugmittel zur Deaktivierung des zweiten oder weiteren Federelements komplett entspannt und zusätzlich soweit gelockert werden sollte, dass fahrzustandsabhängige Verdrehwinkel des konzentrisch zum zweiten oder weiteren Verdreh-Federelement angeordneten Querstabilisators des zweispurigen Fahrzeugs in keiner Situation das genannte Zugmittel spannen können, enthält ein gegenüber dem Verdreh-Federelement um dessen Drehachse verdrehbares Getriebeelement mit einem Vorsprung in Verbindung mit zumindest einem mit dem Verdreh-Federelement verbundenen und mit dem Vorsprung zusammenwirkenden Mitnehmer einen entsprechenden notwendigen Freigang zur Abschaltung bzw. Nicht-Aktivierung des Verdreh-Federelements quasi integriert.

Im übrigen kann auch bei andersartig gestaltetem mechanischem Spannelement ein geeigneter Freigang, der eine Aktivierung des zweiten oder weiteren Verdreh-Federelements durch den Querstabilisator bei Ausübung seiner Stabilisatorfunktion verhindert, vorgesehen sein, worauf im Rahmen der Beschreibung eines Ausführungsbeispiels noch eingegangen wird.

Zurückkommend auf das genannte Getriebeelement mit einem Vorsprung und einem mit diesem zusammenwirkenden Mitnehmer am zweiten oder weiteren Verdrehfederelement kann unter Ausnutzung dieses Freigangs das auf dem Querstabilisator angeordnete rohrförmige Verdreh-Federelement über eine funktional hervorgerufene Verdrehbewegung des Querstabilisators somit solange frei gegenüber dem Getriebeelement der mechanischen Spannvorrichtung verdreht werden, bis der am Getriebeelement vorgesehene Vorsprung (oder dergleichen) am Mitnehmer des Verdreh-Federelements zum Anliegen kommt. In diesem Bereich des Freigangs kann der Querstabilisator somit seine eigentliche Funktion übernehmen, ohne dass hierdurch das zweite (oder weitere) Verdreh-Federelement letztlich zwischen dem jeweiligen Fahrzeug-Rad und dem Fzg.-Aubau eingespannt wird. Dementsprechend ist selbstverständlich das Getriebeelement der mechanischen Spannvorrichtung zunächst soweit zu verdrehen, dass dessen Vorsprung am besagten Mitnehmer zum Anliegen kommt, ehe der zweite oder weitere Verdreh-Federelement aktiviert werden kann. Erst nach Anliegen des besagten Vorsprungs am Mitnehmer kann durch entsprechendes weiteres Verdrehen des Getriebeelements das Verdreh-Federelement verspannt und somit aktiviert werden. Vorteilhafterweise ist aufgrund der Verdrehbewegung des Getriebeelements um die Drehachse des Verdreh-Federelements kein nennenswerter zusätzlicher Bauraum für diesen genannten Freigang erforderlich.

Vorzugsweise wird für das Verdrehen des Verdreh-Federelements ein Schneckentrieb verwendet, d.h. beim genannten Getriebeelement handelt es sich um das Schneckenrad eines motorisch angetriebenen Schneckentriebs. Neben Bauraumvorteilen und einfacher Gestaltung ist hiermit insbesondere eine hohe Untersetzung in der (letzten) Getriebestufe des Schneckentriebs möglich, welche die Anzahl derjenigen Bauteile, die hohe Kräfte aufnehmen bzw. übertragen müssen, reduziert.
Vorteilhafterweise ist hiermit auch eine Selbsthemmung des Antriebs durch den hoch untersetzten Schneckentrieb einfach darstellbar. In einer vorteilhaften Ausgestaltung kann das Schneckenrad aufgrund seines relativ geringen Verdrehwinkels, der erheblich kleiner als 360° sein kann, als Segment ausgeführt sein und benötigt somit nur wenig Bauraum.

Bereits genannt wurde zumindest ein Vorsprung oder dgl. am Schneckenrad bzw. allgemein am Getriebeelement, welcher mit dem besagten Mitnehmer, der in geeigneter, im weiteren noch erläuterten Weise mit dem Verdreh-Federelement verbunden ist, zusammen wirkt bzw. zusammen wirken kann. Selbstverständlich können auch mehrere Vorsprünge und mit diesen zusammenwirkende (segmentförmige) Mitnehmer vorgesehen sein, um die Summen-Kontaktfläche zur Kraftübertragung zwischen dem Getriebeelement und dem Verdreh-Federelement zu vergrößern. Dabei können die Mitnehmer und/oder Vorsprünge elastisch ausgeführt bzw. elastisch mit dem Getriebeelement bzw. mit dem Verdreh-Federelement verbunden sein, um die Stoßbelastung bei der Inkontakt-Bringung zu reduzieren. Ferner können mit dem Verdreh-Federelement zumindest zwei Mitnehmer geeignet derart verbunden sein oder es können am Getriebeelement zumindest zwei Vorsprünge geeignet derart vorgesehen sein, dass eine Verdrehung bzw. Torsion des Verdreh-Federelements sowohl in der einen als auch in der anderen Dreh-Richtung möglich ist. Mit einer solchen Verdrehung des Verdreh-Federelements in beiden möglichen Drehrichtungen kann - wie grundsätzlich bereits weiter oben erwähnt wurde - entweder ein TieferLegen des Fahrzeug-Aufbaus oder ein Beladungsausgleich und somit ein Anheben des Fzg.-Aufbaus erfolgen.

Was den (oder die) genannten, mit dem Verdreh-Federelement zumindest drehfest (um die gemeinsame Drehachse von Querstabilisator und Verdreh-Federelement) verbundenen Mitnehmer betrifft, der bspw. in Längsrichtung der Drehachse des Verdreh-Federelements verschiebbar sein kann, wenn dies aus irgendwelchen Gründen gewünscht sein sollte, so kann dieser - insbesondere an die Gestaltung des Verdreh-Federelements angepasst - verschiedenartig ausgestaltet sein. Handelt es sich bspw. bei dem Verdreh-Federelement um eine rohrförmige Drehstabfeder, die konzentrisch zu einem ansonsten üblichen Querstabilisator des zweispurigen Fahrzeugs angeordnet ist, so kann dieser Mitnehmer einfach als segmentförmiger Absatz oder dgl. auf der Außenwand der rohrförmigen Drehstabfeder angebracht sein. Gleiches gilt bezüglich eines bereits genannten rohrförmigen Gummifederelements oder bezüglich eines zwei oder mehrere solcher rohrförmigen Gummifederelemente außenseitig miteinander verbindenden Rohres. Vorzugsweise an der Außenwand dieses Rohres kann bzw. können der bzw. die genannte(n) Mitnehmer zumindest drehfest befestigt sein, bspw. abermals als segmentförmiger Absatz ausgebildet. Wenn dieses Rohr selbst als Drehstabfeder wirken kann, so sollte der Mitnehmer in Querrichtung des Fahrzeugs betrachtet im wesentlichen mittig auf diesem Rohr angeordnet sein; handelt es sich hingegen um ein im wesentlichen torsionssteifes Rohr, so ist der Anbringungsort des (oder der) Mitnehmer(s) auf der Rohr-Außenwand in Fzg.-Querrichtung beliebig.

Im Weiteren werden mehrere, in den beigefügten Figuren lediglich prinzipiell dargestellte Ausführungsbeispiele der vorliegenden Erfindung beschrieben. Eine erste Ausführungsform ist in den **Figuren 2a - 2c** dargestellt, wobei Fig.2a stark vereinfacht die Aufsicht auf eine solche Anordnung zeigt, während in den Figuren 2b, 2c jeweils der Schnitt A-A aus Fig.2a bei unterschiedlichen Zuständen dargestellt ist. Weitere Ausführungsbeispiele sind ähnlich der Darstellung von Fig.2a in den **Figuren 3a - 3c** gezeigt. Schließlich zeigt die **Figurenfolge 4a - 4c** eine dritte Ausführungsform, wobei in Fig.4a eine Aufsicht (ohne die ersten Federelemente) gezeigt ist, während in Fig.4b die Seitenansicht X aus Fig.4a auf das Getriebeelement mit zugehöriger Schneckentrieb-Spindel in einer ersten Ausführungsform und in Fig.4b in einer zweiten Ausführungsform dargestellt sind.

Zunächst auf **Fig.2a** Bezug nehmend ist mit der Bezugsziffer 13 ein wie üblich als Drehstabfeder ausgebildeter Querstabilisator bezeichnet, der in bekannter Weise zwischen den beiden Rädern einer Fzg.-Achse eingespannt ist, und zwar über an seinen abgewinkelten freien Endabschnitten angelenkte Pendelstützen 14, 14'. Jede Pendelstütze ist am zugeordneten Rad 12* bzw. 12', genauer am linken bzw. rechten Radträger, geeignet abgestützt. Mit seinem sich geradlinig erstreckenden Abschnitt zwischen den beiden demgegenüber abgewinkelten Endabschnitten ist der Querstabilisator 13 in nicht gezeigten Lagerstellen in üblicher Weise am bzw. gegenüber dem Fzg.-Aufbau (11), der in dieser Figur nicht dargestellt ist, verdrehbar gelagert. Ebenfalls nicht figürlich dargestellt sind die üblichen bspw. als Schraubendruckfedern ausgebildeten Tragfedern zwischen dem Fzg.-Aufbau und den Fzg.-Rädern 12, 12', die jeweils ein sog. erstes Federelement (1) im Sinne der vorliegenden Erfindung bilden.

Figürlich dargestellt ist jedoch ein zweites Federelement 2 sowohl für das linke Fzg.-Rad 12* bzw. dessen erstes Federelement als auch für das rechte Fzg.-Rad 12' bzw. dessen erstes Federelement. Dieses zweite Federelement 2 ist hier als rohrförmige Drehstabfeder (ebenfalls Bezugsziffer 2) ausgebildet und derart angeordnet, dass es/sie den Querstabilisator 13 in seinem sich geradlinig zwischen den abgewinkelten Endabschnitten erstreckenden Abschnitt umhüllt. Somit erstreckt sich dieses zweite Federelement 2 ebenso wie der Querstabilisator 13 in Fzg.-Querrichtung zwischen den beiden Rädern 12*, 12', jedoch von diesen beabstandet, wobei diese rohrförmige Drehstabfeder 2 mit ihren beiden Enden am Querstabilisator 13 befestigt ist.

In Längsrichtung dieser rohrförmigen Drehstabfeder 2, d.h. in Fzg.-Querrichtung betrachtet ist mittig an diesem zweiten Federelement 2, d.h. in der Mitte der rohrförmigen Drehstabfeder 2 an deren Rohr-Außenwand tangential weggerichtet ein Zugmittel 4 angebracht, das sich senkrecht zu deren Längsrichtung und somit in Längsrichtung des Fahrzeugs erstreckt. Dieses Zugmittel 4 ist mit seinem anderen Ende (analog der weiter oben erläuterten Figuren 1a, 1b) auf einer von einem Elektromotor 6 in Drehbewegung versetzbaren Rolle 5 aufgewickelt, die bspw. über den Elektromotor 6 am figürlich nicht dargestellten Fzg.-Aufbau (11) abgestützt ist. Mit einem Rotieren der Rolle 5 wird somit das freie Trum des Zugmittels 4 zwischen der Rolle 5 und dem zweiten Federelement 2 verkürzt oder verlängert, wobei ein Verkürzen des freien Trums des Zugmittels 4 aufgrund der Tatsache, dass das zweite Federelement 2, d.h. die rohrförmige Drehstabfeder 2 mit ihren Endabschnitten am Querstabilisator 13 befestigt ist, stets ein Tordieren des zweites Federelements 2 (= der rohrförmigen Drehstabfeder 2) hervorruft, wodurch diese(s) gespannt wird. Umgekehrt ruft ein Verlängern des freien Trums des Zugmittels 4 bei zunächst gespanntem zweiten Federelement 2 ein Entspannen desselben hervor. Dabei ist der vollständig entspannte Zustand des Federelements 2 in Fig.2b dargestellt, in der das schlapp durchhängende (und somit seinerseits ebenfalls nicht gespannte) Zugmittel 4 bzw. dessen zwischen dem Federelement 2 und der Rolle 5 befindliches Trum sichtbar ist. Beim Zustand nach Fig.2c hingegen ist dieses Trum und somit das Zugmittel 4 gespannt, wobei das als rohrförmige Drehstabfeder 2 ausgebildete Federelement 2 gegenüber dem Zustand nach Fig.2b durch das Zugmittel 4 um ca.90° mittig verdreht bzw. tordiert wurde, wie sich aus der unterschiedlich liegenden Markierung 2a ergibt.

Wenn nun das zweite Federelement 2 gemäß der Darstellung in Fig.2c gespannt ist, so wirkt dieses Federelement 2 parallel zu den genannten ersten Federelementen der beiden Räder 12*, 12', nachdem das zweite Federelement 2 mittig quasi mit einem Ende über das durch das Zugmittel 4 sowie die Rolle 5 gebildete mechanische Spannelement am Fzg-Aufbau (11) abgestützt ist und mit dem linken bzw. rechten Ende jeweils über einen Teilabschnitt des Querstabilisators 13 sowie über die jeweilige Pendelstütze 14 bzw. 14' am jeweiligen Rad 12* bzw. 12' abgestützt ist. Auf das jeweilige Fzg.-Rad 12* bzw. 12' bezogen wirkt dabei jeweils nur die Hälfte der rohrförmigen Drehstabfeder 2 als zweites Federelement 2, d.h. für das linke Rad 12* wirkt der linke sich vom Querstabilisator 13 bis zum Angriffspunkt des Zugmittels 4 erstreckende Abschnitt der rohrförmigen Drehstabfeder 2 als zweites Federelement 2 und in vergleichbarer Weise wirkt für das rechte Rad 12' der rechte sich vom Querstabilisator 13 bis zum Angriffspunkt des Zugmittels 4 erstreckende Abschnitt der rohrförmigen Drehstabfeder 2 als zweites Federelement 2. Nachdem das zweite Federelement 2 bei dieser soweit erläuterten Konstruktion für das linke Rad 12* und für das rechte Rad 12' durch ein zusammenhängendes Bauteil, nämlich durch die besagte rohrförmige Drehstabfeder 2 gebildet wird, unterstützt diese rohrförmige Drehfeder 2 im nicht gespannten Zustand gemäß Fig.2b den Querstabilisator 13 in seiner Wirkung; im gespannten Zustand (und somit bei gespanntem Zugmittel 4 gemäß Fig.2c) hingegen wirkt die Drehsteifigkeit der Drehstabfeder 2 über die jeweilige Pendelstütze 14, 14' auf das Fahrwerk und zieht dabei den Fzg.-Aufbau (11) bspw. nach unten zur Fahrbahn hin, wobei die Stabilisatorfunktion hiervon unberührt bleibt.

Nach einem vom soweit beschriebenen Ausführungsbeispiel abgewandelten (figürlich nicht dargestellten) Ausführungsbeispiel können anstelle der einstückigen rohrförmigen Drehstabfeder 2 zwei voneinander getrennte rohrförmige Drehstabfedern vorgesehen sein, indem abweichend vom beschriebenen Ausführungsbeispiel unterhalb des Zugmittels 4 eine Teilung der rohrförmigen Drehstabfeder 2 vorgesehen ist. Dann existiert also jeweils für sich eine linke, dem linken Rad 12* zugeordnete Hälfte, sowie eine rechte, dem rechten Rad 12' zugeordnete Hälfte und diese beiden Hälften der rohrförmigen Drehstabfeder sind praktisch nur durch das bandförmige Zugmittel 4 im gespannten Zustand desselben miteinander verbunden.

Nicht sichtbar ist hier aufgrund der auf das Wesentliche abstrahierten Schnittdarstellung ein weiteres Merkmal, nämlich dass die Rohrwand der rohrförmigen Drehstabfeder 2 geschlitzt ausgeführt ist bzw. sein kann, und zwar unter anderem um eine gewünschte Federrate realisieren zu können. Vorzugsweise kann dieser Schlitz zur Verringerung der auftretenden Spannungen schräg verlaufen. Ein solcher sich mit Ausnahme des Bereichs der nachträglichen Befestigungsstellen der rohrförmigen Drehstabfeder 2 am Querstabilisator 13 über der gesamten Länge der Drehstabfeder 2 im wesentlichen in Längsrichtung erstreckender Schlitz kann ferner dazu dienen, eine Montage der Drehstabfeder 2 auf dem Querstabilisator 13 zu ermöglichen.

Nach einem weiteren von der figürlichen Darstellung abweichenden Ausführungsbeispiel können zumindest zwei Zugmittel (4) seitlich sowie hinsichtlich ihrer Zugrichtung versetzt (insbesondere einander entgegengerichtet) an der rohrförmigen Drehstabfeder 2 angebracht sein, wodurch mit diesen Zugmitteln (4) im wesentlichen alleinig Torsionskräfte in diese Drehstabfeder 2 eingeleitet werden, während deren Belastung auf Biegung erheblich reduziert werden kann.

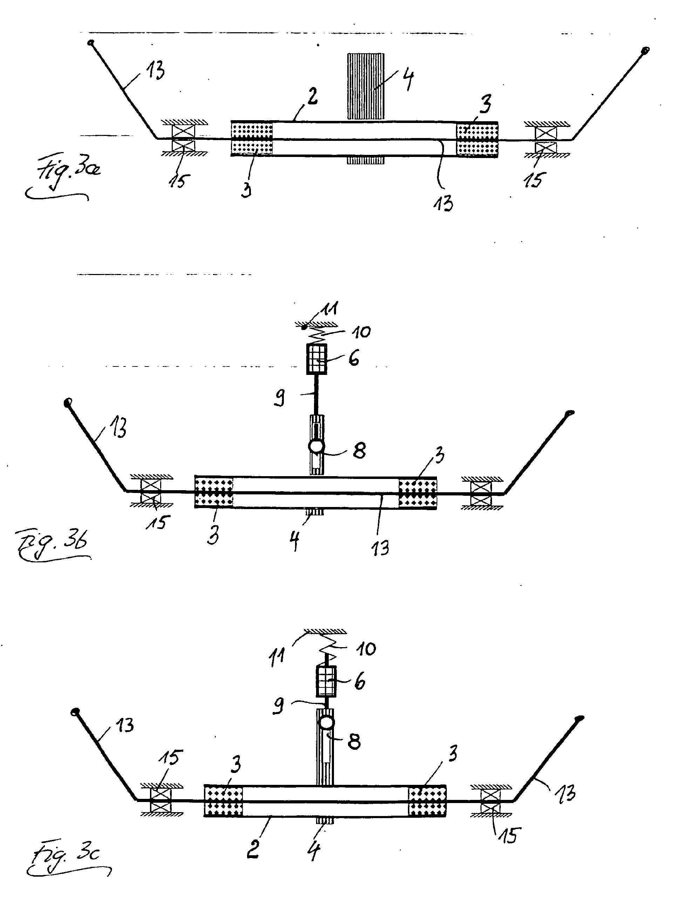

Ein weiteres Ausführungsbeispiel ist in den **Fig.3a, 3b, 3c** dargestellt. Abweichend vom Ausführungsbeispiel nach Fig.2a ist hier die rohrförmige Drehstabfeder 2 mit ihren Endabschnitten nicht direkt am Querstabilisator 13 befestigt, sondern es ist in diesen Bereichen linksseitig sowie rechtsseitig jeweils ein rohrförmiges Gummifederelement 3 zwischengeschaltet. Diese rohrförmigen Gummifederelemente 3, die an den Enden der rohrförmigen Drehstabfeder 2 zwischen dieser sowie dem Querstabilisator 13 eingespannt sind, wirken als weiteres, drittes Federelement, das bzw. die über das Zugmittel 4 zuschaltbar oder deaktivierbar ist bzw. sind. Abweichend von diesem Ausführungsbeispiel kann ein rohrförmiges Gummifederelement 3 ähnlich der rohrförmigen Drehstabfeder 2 selbstverständlich auch als zweites Federelement 2 wirken, wenn das Zugmittel 4 (bzw. allgemein ein mechanisches Spannelement) direkt an diesem rohrförmigen Gummifederelement, welches auf dem Querstabilisator 13 angeordnet ist, angreift. Im übrigen sind in dieser Figurenfolge 3a, 3b, 3c die Lager des Querstabilisators 13 am Fahrzeug-Aufbau 11 dargestellt und mit der Bezugsziffer 15 gekennzeichnet.

Die **Figuren 3b, 3c** zeigen ferner eine Abwandlung der mechanischen Spannvorrichtung. Diese weist weiterhin ein am zweiten oder weiteren Federelement 2 angreifendes flexibles Zugmittel 4 in Form eines breiten Zugbandes auf, jedoch ist dieses über eine im entspannten Zustand eine ausreichende Freigängigkeit, d.h. einen ausreichenden Freigang gewährleistende Freilaufeinrichtung 8 mit einer mittels des Stellmotors 6 verlagerbaren Spindel 9 verbunden. Diese Freilaufeinrichtung 8 bzw. dieser Freigang 8 ist wie figürlich dargestellt durch einen im Bereich des freien Endes des Zugmittels 4 vorgesehenen Längsschlitz gebildet, in dem das freie Ende der Spindel 9 derart in deren möglicher Bewegungsrichtung um eine gewisse Strecke bewegbar geführt ist, dass im entspannten Zustand dieses Zugmittels 4 gemäß Fig.3b keine Beeinträchtigung durch die oder Einschränkung der Drehbewegungen des Querstabilisators 13 auftreten kann, d.h. dass sich das Zugmittel 4 diesen folgend gegenüber der stillstehenden Spindel 9 ausreichend bewegen kann. Im gespannten Zustand hingegen, der in Fig.3c dargestellt ist, ist diese Freilaufeinrichtung 8 (= Freigang 8) funktional blockiert, indem das freie Ende der Spindel 9 am Endanschlag des besagten Längsschlitzes anliegt und dabei das Zugband bzw. Zugmittel 4 in Richtung zum Stellmotor 6 zieht.

Diese beiden Figuren zeigen ferner, dass das mechanische Spannelement selbst, und hier der Stellmotor 6 mit der Spindel 9, alternativ jedoch auch die weiter oben genannte Rolle 5 oder dgl., unter Zwischenschaltung eines weiteren Federelements 10 am Fahrzeug-Aufbau 11 befestigt sein kann. Dies ermöglicht eine zusätzliche Abstimmung oder Verstimmung der Steifigkeit des Federungssystems.

Im weiteren sind Ausführungsformen beschrieben, die nicht auf eines der hier beschriebenen Ausführungsbeispiele beschränkt sind. So kann an einem zweiachsigen Fahrzeug ein entsprechendes erfindungsgemäßes Federungssystem mittels eines einzigen Stellmotors (vgl. Bezugsziffer 6 in Fig.2a) für mehrere den einzelnen Achsen bzw. Rädern zugeordnete mechanische Spannelemente betrieben werden, wenn bspw. (unter Bezugnahme auf das Ausführungsbeispiel nach Fig.2a) ein der Fzg.-Vorderachse zugeordnetes Zugmittel 4 und ein der Fzg.-Hinterachse zugeordnetes Zugmittel 4 jeweils bspw. in den Bereich der Fahrzeugmitte geleitet werden, wo dieser einzige Stellmotor 6 für die beiden Rollen 5 der beiden Zugmittel 4 am Unterboden des Fzg.-Aufbaus 11 befestigt sein kann.

Im Sinn einer vorteilhaften Weiterbildung der Erfindung kann das Zugmittel 4 selbst elastisch ausgelegt sein und somit als (weitere) Zusatzfeder wirken.

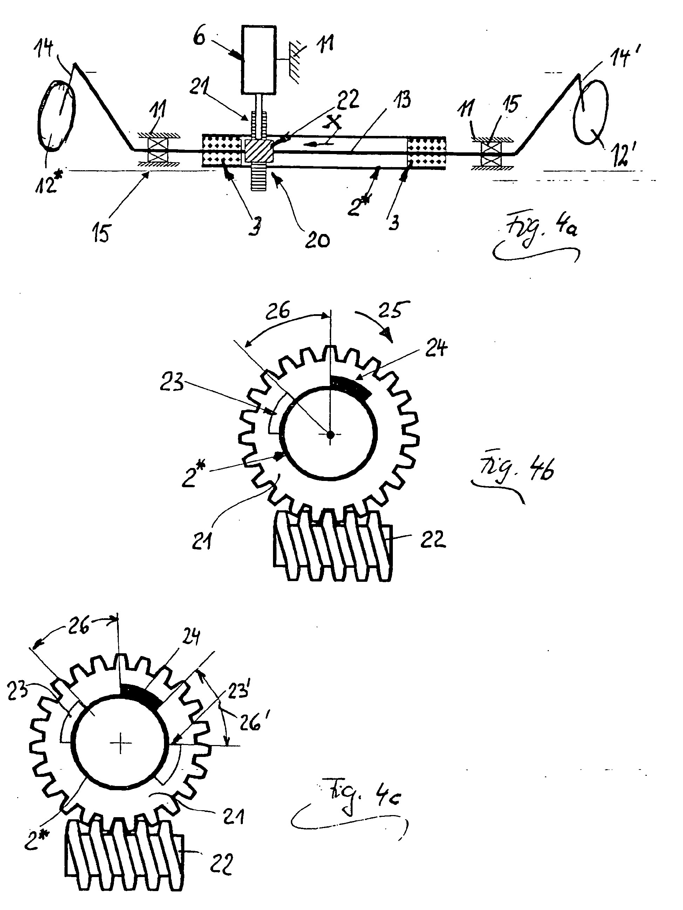

Schließlich zeigt die **Figurenfolge 4a - 4c** eine weitere Ausführungsform, wobei in Fig.4a eine Aufsicht (ohne die ersten Federelemente) gezeigt ist, während in Fig.4b die Seitenansicht X aus Fig.4a auf das Getriebeelement mit zugehöriger Schneckentrieb-Spindel in einer ersten Ausführungsform und in Fig.4c in einer zweiten Ausführungsform dargestellt sind.

Zunächst auf Fig.4a Bezug nehmend ist Federungssystem ähnlich der bereits erläuterten Fig.2a dargestellt. Abweichend hiervon ist bei der Ausführungsform nach Fig.4a das zweite oder weitere Federelement 3 jedoch nur durch zwei voneinander beabstandet auf dem Querstabilisator 13 drehfest aufgebrachte, rohrförmige Verdreh-Federelemente 3 aus einem Elastomerwerkstoff (= sog. rohrförmige Gummifederelemente 3) gebildet, deren Außenmantelflächen über ein im wesentliches torsionssteifes Rohr 2* praktisch drehfest miteinander verbunden sind.

Auf dem Rohr 2* bzw. auf dessen Außenwand ist ein Getriebeelement 21 in Form eines Schneckenrads (ebenfalls Bezugsziffer 21) um die Längsachse dieses Rohres 2*, die mit der Achse des geradlinigen Abschnitts des Querstabilisators 13 zusammenfällt, verdrehbar gelagert. Mit diesem Schneckenrad 21 oder Getriebeelement 21 kämmt eine Schneckenspindel 22, die von einem Elektromotor 6, der am Fzg.-Aufbau 11 abgestützt ist, um ihre Längsachse in Rotation versetzt werden kann. Das Schneckenrad 21 und die Schneckenspindel 22 bilden somit einen Schneckentrieb 20, der motorisch antreibbar ist und der als mechanisches Spannelement im Sinne der vorliegenden Erfindung fungiert, weshalb für dieses mechanische Spannelement ebenfalls die Bezugsziffer 20 verwendet wird.

Im Hinblick auf die Funktion als mechanisches Spannelement 20 für die zweiten oder weiteren Federelemente 3 ist an der Seitenwand des Getriebeelements 21 / Schneckenrads 21 - wie Fig.4b zeigt - ein segmentförmiger Vorsprung 23 vorgesehen, der mit einem im Bereich dieses Getriebeelements 21 auf der Außenwand des Rohres 2* befestigten (oder aus dieser herausgearbeiteten) Mitnehmer 24 zusammenwirken kann, derart, dass nach Verdrehen des Schneckenrads 21 gemäß Pfeilrichtung 25 und somit nach Überwinden eines Freigangs 26 der Vorsprung 23 am Mitnehmer 24 zum Anschlag kommt. Wird danach das Schneckenrad/Getriebeelement 21 geringfügig weiter gemäß Pfeilrichtung 25 verdreht, so wird das Rohr 2* ebenfalls verdreht, wodurch die Verdreh-Federelemente 3 in sich tordiert und somit gespannt werden. Wenn dann die zweiten (oder weiteren) Federelemente 3 gespannt sind, so wirken diese parallel zu den genannten ersten Federelementen der beiden Räder 12*, 12', und zwar über die außenseitigen Teilabschnitte des Stabilisators 13 sowie über die jeweilige Pendelstütze 14 bzw. 14'.

Das verdrehbar auf der Drehstabfeder 2 gelagerte Schneckenrad 21 ist so angeordnet, dass bei nicht gemäß obiger Schilderung aktivierten Verdreh-Federelementen 3 der bereits genannte Freigang 26 bzw. eine entsprechende Freigängigkeit wischen dem Vorsprung 23 und dem Mitnehmer 24 vorliegt, so dass bei Wankbewegungen des Fahrzeugaufbaus der Querstabilisator 13 in bekannter Weise in sich tordiert werden kann, wobei auch eine entsprechende Torsion der Verdreh-Federelemente 3 erfolgt, so dass diese den Querstabilisator 13 in seiner Wirkung unterstützen. Hierbei soll jedoch der Mitnehmer 24 nicht am Vorsprung 23 anschlagen, so dass über die mechanische Spannvorrichtung 20 keine zusätzliche Federkraft eingeleitet wird. Letzteres soll nämlich nur durch entsprechende Ansteuerung des Elektromotors 6 und eine damit verbundene Verdrehung des Schneckenrads 21 erfolgen.

Beim Ausführungsbeispiel nach Fig.4c ist an der Seite des Schneckenrades 21 jeweils unter Vorsehen eines gewissen bzw. ausreichenden Freigangs 26, 26' gegenüber dem auf dem Rohr 2* vorgesehenen Mitnehmer 24 beidseitig desselben jeweils ein Vorsprung 23 bzw. 23' vorgesehen, so dass in Abhängigkeit von der Drehrichtung des Schneckenrads 21 (in bzw. gegen Uhrzeigersinn) die Verdreh-Federelemente 3 in der einen oder der anderen Richtung vorgespannt werden können, wodurch selbstverständlich unterschiedliche Auswirkungen erzielt werden, nämlich in einem Fall ein Absenken des Fahrzeug-Aufbaus 11 und im anderen Fall ein Anheben desselben, insbesondere für einen Beladungsausgleich.

Es wurde bereits erwähnt, dass ein erfindungsgemäßes Federungssystem solchermaßen gestaltet bzw. ausgelegt sein kann, dass mit Aktivieren des zweiten Federelements 2 der Fzg.-Aufbau 11 zur Fahrbahn hin nach unten gezogen wird. Ein härteres Fahrwerk aufgrund des zweiten Federelements wird hierdurch vorteilhafterweise mit einem Tieferlegen des Fzg.-Aufbaus verbunden. Insbesondere kann vorgesehen sein, dass der Fahrer hierbei individuell zwischen einem hartem und einem weichem Fahrwerk wählen kann, wobei zusätzlich zur unterschiedlichen Federraten-Schaltung auch eine parallele Veränderung der Dämpfungscharakteristik über unterschiedlich einstellbare Verstelldämpfer im Hinblick auf eine optimale Auslegung vorgesehen sein kann. Ein Tieferlegen des Fzg.-Aufbaus kann jedoch auch als Beladungshilfe eingesetzt werden und insbesondere dann erfolgen, wenn der Kofferraumdeckel oder die Heckklappe des Fahrzeugs geöffnet wird. Mit Schließen des Deckels oder der Klappe kann der Fzg.-Aufbau dann wieder angehoben werden. Vorteilhafterweise kann ein Elektromotor, der zum Öffnen der Klappe vorgesehen ist, gleichzeitig geeignet mechanisch mit dem erfindungsgemäßen mechanischen Spannelement (beispielsweise mit der genannten Rolle 5 oder der Schneckenspindel 22 desselben) verbunden sein, derart, dass mit einem Öffnen der Heckklappe ausgelöst durch diesen Motor gleichzeitig ein Tieferlegen des Fzg.-Aufbaus erfolgt.

Was die hier vorgestellte sog. Federraten-Schaltung betrifft, so kann - wie bereits erwähnt wurde - die Auslegung jedoch auch entgegengesetzt zu der im vorhergehenden Absatz erläuterten sein, d.h. dass ein erfindungsgemäßes Federungssystem für einen Beladungsausgleich genutzt werden kann, in dem Sinne, dass mit zunehmender Beladung der sich hierdurch absenkende Fzg.-Aufbau angehoben wird, wobei noch darauf hingewiesen sei, dass eine Vielzahl weiterer Details durchaus abweichend von obigen Erläuterungen gestaltet sein kann, ohne den Inhalt der Patentansprüche zu verlassen.

## Patentansprüche

1. Federungssystem für eine Radaufhängung eines zweispurigen Fahrzeugs mit einem letztlich zwischen dem Fahrzeug-Aufbau (11) und einem Fahrzeug-Rad (12*, 12') eingespannten ersten Federelement (1) und einem zweiten oder weiteren mittels eines am Fahrzeug-Aufbau (11) abgestützten mechanischen Spannelements (4, 5, 6, 20) letztlich zwischen dem Fahrzeug-Aufbau (11) und dem Fahrzeug-Rad (12*, 12') einspannbaren Federelement (2, 3), das somit dem ersten Federelement (1) parallel geschaltet werden oder nicht aktiv geschaltet werden kann, wobei das zweite oder weitere Federelement (2, 2) als Verdreh-Federelement (2, 3) ausgebildet ist,
**dadurch gekennzeichnet, dass** das zweite oder weitere Federelement (2, 3) einen ebenfalls als Drehstabfeder ausgebildeten Querstabilisator (13) abschnittsweise umhüllt und derart mit diesem verbunden ist, dass die Federkraft im aktivierten Zustand über den Querstabilisator (13) an die Fahrzeug-Räder (12*, 12') übertragen wird.

2. Federungssystem nach Anspruch 1,
**dadurch gekennzeichnet, dass** das als zweites oder weiteres Federelement (2, 3) fungierende Verdreh-Federelement (3) als rohrförmiges Gummifederelement (3) ausgebildet ist.

3. Federungssystem nach Anspruch 2,
**dadurch gekennzeichnet, dass** zumindest zwei Verdreh-Federelemente (3) vorgesehen sind, die außenseitig über ein torsionssteifes oder seinerseits als Federelement wirkendes Rohr (2*) miteinander verbunden sind.

4. Federungssystem nach Anspruch 1,
**dadurch gekennzeichnet, dass** das zweite oder weitere Federelement (2, 3) als rohrförmige Drehstabfeder (2) ausgebildet ist.

5. Federungssystem nach Anspruch 4,
**dadurch gekennzeichnet, dass** die Rohrwand der rohrförmigen Drehstabfeder (2) geschlitzt, vorzugsweise schräg geschlitzt ist.

6. Federungssystem nach einem der vorangegangenen Ansprüche,
**dadurch gekennzeichnet, dass** das mechanische Spannelement (4, 5, 6) durch ein am zweiten oder weiteren Federelement (2, 3) angreifendes flexibles Zugmittel (4), das auf einer Rolle (5) oder dgl. aufwickelbar oder von dieser abwickelbar ist, und einen diese Rolle (5) antreibenden Stellmotor (6) gebildet ist.

7. Federungssystem nach einem der vorangegangenen Ansprüche,
**dadurch gekennzeichnet, dass** das zweite und ein weiteres rohrförmiges Federelement (2) nebeneinander angeordnet und im Bereich ihren einander zugewandten Stirnseiten über das vorzugsweise bandförmige Zugmittel (4) miteinander verbunden sind.

8. Federungssystem nach einem der vorangegangenen Ansprüche,
**dadurch gekennzeichnet, dass** am rohrförmigen zweiten oder weiteren Federelement (2) einander entgegengerichtet zwei Zugmittel (4) angreifen, die dieses beim Aktivieren gleichsinnig tordieren.

9. Federungssystem nach einem der Ansprüche 1 - 5,
**dadurch gekennzeichnet, dass** das mechanische Spannelement (20) durch einen mit dem zweiten oder weiteren Federelement (2, 3) verbundenen Mitnehmer (24) und ein mit diesem Mitnehmer (24) beispielsweise über einen Vorsprung (23) oder dgl. zusammenwirkendes, gegenüber dem zweiten oder weiteren Federelement (2, 3) um dessen Drehachse verdrehbares Getriebeelement (21) gebildet ist.

10. Federungssystem nach Anspruch 9,
**dadurch gekennzeichnet, dass** das Getriebeelement (21) ein Schneckenrad (21) eines motorisch angetriebenen und am Fahrzeug-Aufbau abgestützten Schneckentriebs (20) ist.

11. Federungssystem nach Anspruch 9 oder 10,
**dadurch gekennzeichnet, dass** dem zweiten oder weiteren Federelement (2, 3) zumindest zwei Mitnehmer (24) oder dem Getriebeelement (21) zumindest zwei Vorsprünge (23) derart zugeordnet sind, dass eine Torsion des zweiten oder weiteren Federelements (2, 3) in der einen oder anderen Richtung möglich ist.

## Claims

1. A suspension system for a wheel suspension of a two-track vehicle with a first spring element (1) finally clamped between the vehicle bodywork (11) and a vehicle wheel (12*, 12'), and a second or further spring element (2, 3) which can be finally clamped between the vehicle bodywork (11) and the vehicle wheel (12*, 12') by means of a mechanical clamping element (4, 5, 6, 20) supported on the vehicle bodywork (11) and which can therefore be switched in parallel to the first spring element (1) or non-actively switched, the second or further spring element (2, 2) being configured as a torsional spring element (2, 3), **characterised in that** the second or further spring element (2, 3) in portions surrounds a transverse stabiliser (13) also configured as a torsion bar spring and is connected thereto in such a way that the spring force in the activated state is transmitted via the transverse stabiliser (13) to the vehicle wheels (12*, 12').

2. A suspension system according to claim 1, **characterised in that** the torsional spring element (3) acting as the second or further spring element (2, 3) is configured as a tubular rubber spring element (3).

3. A suspension system according to claim 2, **characterised in that** at least two torsional spring elements (3) are provided, which are connected to one another on the outside by means of a tube (2*) which is torsion-proof or in turn acts as a spring element.

4. A suspension system according to claim 1, **characterised in that** the second or further spring element (2, 3) is configured as a tubular torsion bar spring (2).

5. A suspension system according to claim 4, **characterised in that** the tube wall of the tubular torsion bar spring (2) is slotted, preferably obliquely slotted.

6. A suspension system according to any one of the preceding claims, **characterised in that** the mechanical clamping element (4, 5, 6) is formed by a flexible traction means (4) engaging on the second or further spring element (2, 3), which traction means can be wound onto a roller (5) or the like or can be unwound therefrom, and a servomotor (6) driving this roller (5).

7. A suspension system according to any one of the preceding claims, **characterised in that** the second and a further tubular spring element (2) are arranged next to one another and are connected to one another in the region of their mutually facing end faces by means of the preferably strip-shaped traction means (4).

8. A suspension system according to any one of the preceding claims, **characterised in that** two traction means (4), acting in opposite directions to one another engage on the tubular second or further spring element (2) and twist the latter in the same direction on activation.

9. A suspension system according to any one of claims 1 to 5, **characterised in that** the mechanical clamping element (20) is formed by a driver (24) connected to the second or further spring element (2, 3) and a gearing element (21) which cooperates with this driver (24), for example via a projection (23) or the like and can be rotated relative to the second or further spring element (2, 3) around the rotational axis thereof.

10. A suspension system according to claim 9, **characterised in that** the gearing element (21) is a worm gear (21) of a worm drive (20) which is driven by a motor and supported on the vehicle bodywork.

11. A suspension system according to claim 9 or 10, **characterised in that** at least two drivers (24) are associated with the second or further spring element (2, 3) or at least two projections (23) are associated with the gearing element (21) in such a way that a torsion of the second or further spring element (2, 3) in one direction or the other is possible.

## Revendications

1. Système de ressort pour une suspension de roue d'un véhicule à deux voies, comportant un premier élément de ressort (1) enserré finalement entre le châssis (11) du véhicule et une roue (12*, 12') du véhicule ainsi qu'un second ou autre élément de ressort (2, 3) serré à l'aide d'un élément de serrage (4, 5, 6, 20), mécanique appuyé contre le châssis (11) du véhicule et sa roue (12*, 12'), pour être ainsi monté en parallèle par rapport au premier élément de ressort (1) ou pouvoir être neutralisé,
le second ou autre élément de ressort (2, 3) étant réalisé comme élément de ressort de rotation (2, 3),
**caractérisé en ce que**
le second ou autre élément de ressort (2, 3) entoure par segment, un stabilisateur transversal (13) également réalisé comme ressort à barre de torsion, en étant relié à celui-ci pour qu'à l'état activé, la force de ressort soit transmise par le stabilisateur transversal (13) aux roues (12*, 12') du véhicule.

2. Système de ressort selon la revendication 1,
**caractérisé en ce que**
l'élément de ressort de torsion (3) fonctionnant comme second ou autre élément de ressort (2, 3) de rotation est un élément de ressort en caoutchouc (3) de forme tubulaire.

3. Système de ressort selon la revendication 2,
**caractérisé par**
au moins deux éléments de ressort de rotation (3) reliés l'un à l'autre du côté extérieur par un tube (2*) rigide en torsion ou fonctionnant lui-même comme élément de ressort.

4. Système de ressort selon la revendication 1,
**caractérisé en ce que**
le second ou autre élément de ressort (2, 3) est un ressort tubulaire en forme de barre de torsion (2).

5. Système de ressort selon la revendication 4,
**caractérisé en ce que**
la paroi tubulaire du ressort tubulaire en forme de barre de torsion (2) est fendue de préférence avec une fente en biais.

6. Système de ressort selon l'une des revendications précédentes,
**caractérisé en ce que**
l'élément de serrage mécanique (4, 5, 6) est formé par un moyen de traction (4) flexible, agissant sur le second ou autre élément de ressort (2, 3), ce moyen de traction pouvant être enroulé sur un rouleau (5) ou analogue ou en être dévidé et par un moteur d'actionneur (6) entraînant le rouleau (5).

7. Système de ressort selon l'une des revendications précédentes,
**caractérisé en ce que**
le second élément de ressort (2) et un autre élément de ressort tubulaire sont juxtaposés et dans la région de leur face frontale tournée l'une vers l'autre, ils sont reliés de préférence par le moyen de traction (4) en forme de ruban.

8. Système de ressort selon l'une des revendications précédentes,
**caractérisé en ce que**
deux moyens de traction (4) de sens opposé, agissent sur le second ou autre élément de ressort (2), tubulaire, ces moyens de traction se tordant dans le même sens lorsqu'ils sont activés.

9. Système de ressort selon l'une des revendications 1 à 5,
**caractérisé en ce que**
l'élément de serrage mécanique (20) est formé par un organe d'entraînement (24) relié au second ou autre élément de ressort (2, 3) et un élément de transmission (21) coopérant avec cet organe d'entraînement (24) par exemple par l'intermédiaire d'une partie en saillie (23) ou analogue, en pouvant être tourné par rapport au second ou autre élément de ressort (2, 3) autour de son axe de rotation.

10. Système de ressort selon la revendication 9,
**caractérisé en ce que**
l'élément de transmission (21) est une roue à vis (21) d'un entraînement à vis (20) entraînée par un moteur et prenant appui contre le châssis du véhicule.

11. Système de ressort selon la revendication 9 ou 10,
**caractérisé en ce qu'**
au moins deux organes d'entraînement (24) sont associés au second ou autre élément de ressort (2, 3) ou au moins deux parties en saillie (23) sont associées à l'élément de transmission (21) pour permettre une torsion du second ou autre élément de ressort (2, 3) dans l'une ou l'autre direction.
